# EUROPÄISCHE PATENTANMELDUNG

(11) **EP 4 459 399 A1**
(43) Veröffentlichungstag der Anmeldung: **06.11.2024**
(21) Anmeldenummer: 23171143.3
(22) Anmeldetag: 02.05.2023
(51) Int. Cl.: G05B 19/418, G05B 23/02

(54) **VERFAHREN ZUM BETREIBEN EINES RESSOURCENMANAGEMENTSYSTEMS FÜR EINE PRODUKTIONSANLAGE FÜR ZUMINDEST EIN PRODUKT, COMPUTERPROGRAMMPRODUKT, COMPUTERLESBARES SPEICHERMEDIUM, RESSOURCENMANAGEMENTSYSTEM SOWIE PRODUKTIONSANLAGEN**

(71) Anmelder: Siemens Aktiengesellschaft, 80333 München (DE)
(72) Erfinder: Reisacher, Marco, 81669 München (DE); Blenk, Andreas, 86916 Kaufering (DE)
(74) Vertreter: Siemens Patent Attorneys

(57) **Zusammenfassung**

Verfahren zum Betreiben eines Ressourcenmanagementsystems (22) für eine Produktionsanlage (10) für zumindest ein Produkt (12), mit den Schritten:
- Empfangen von Leistungsmetriken (42) von einer maschinellen Lernplattform (16) der Produktionsanlage (10) für einen Produktionsprozess des Produkts (12);
- Empfangen von Netzwerkdaten (44) von einer Netzwerkeinrichtung (16) der Produktionsanlage (10) für den Produktionsprozess;
- Empfangen von Maschinendaten (46) von zumindest einer am Produktionsprozess beteiligten Maschine (18) der Produktionsanlage (10);
- Auswerten der Leistungsmetriken (42) und der Netzwerkdaten (44) und der Maschinendaten (46);
- Auswählen einer Konfiguration (48) aus einer Konfigurationsdatenbank (36) des Ressourcenmanagementsystems (22) in Abhängigkeit von der Auswertung; und
- Erzeugen von zumindest einem Steuerbefehl (50) zum Ändern eines Einstellungsparameters der maschinellen Lernplattform (14) und/oder der Netzwerkeinrichtung (16) und/oder der zumindest einem beteiligten Maschine (18) in Abhängigkeit von der ausgewählten Konfiguration (48).

Ferner betrifft die Erfindung ein Computerprogrammprodukt, ein computerlesbares Speichermedium, ein Ressourcenmanagementsystem (22) sowie eine Produktionsanlage (10).

## Beschreibung

Die Erfindung betrifft ein Verfahren zum Betreiben eines Ressourcenmanagementsystems für eine Produktionsanlage für zumindest ein Produkt gemäß dem geltenden Patentanspruch 1. Ferner betrifft die Erfindung ein Computerprogrammprodukt, ein computerlesbares Speichermedium, ein Ressourcenmanagementsystem sowie eine Produktionsanlage.

In einer heutigen Umgebung einer Produktionsanlage, beispielsweise einer Fabrikumgebung, in der ein Fabrikbetreiber entsprechende Gerätenetzwerke initialisiert, kann sich ein Problem der Ressourcenzuweisung darstellen. Nach anfänglichen Einstellungen verbleiben das Netz und entsprechende Geräte in einem Status Quo für den Betrieb. Der Betreiber kann diese Konfiguration ändern, wenn ein Problem mit beispielsweise einer Dienstgüte auftritt. Beispielsweise kann eine Anwendung für maschinelles Lernen eine schlechte Leistung aufweisen, beispielsweise eine schlechte Vorhersagezuverlässigkeit. In diesem Fall kann der Betreiber manuell verschiedene Gegenmaßnahmen ergreifen. Eine solche Maßnahme kann beispielsweise eine Analyse und mögliche Neukonfiguration des Netzwerks sein, dass die Maschine und ihre Sensoren mit dem Anwendungsserver verbindet. Eine solche Analyse kann jedoch zu kostspielig und zeitintensiv sein und kann daher nicht in akzeptabler Zeit durchgeführt werden. Die Rekonfiguration kann das Problem entschärfen, indem der Verbindung mehr Ressourcen hinzugefügt werden oder der Verkehr priorisiert wird. Führt die Neukonfiguration nicht zum gewünschten Ergebnis, bleibt dem Betreiber möglicherweise nur die letzte Möglichkeit, den betroffenen Rechner und/oder Fertigungslinie und/oder Maschine abzuschalten, bis die Dienstqualität wiederhergestellt ist. Die Wiederherstellung der Dienstqualität erfolgt jedoch möglicherweise nicht in akzeptabler Zeit. Die Abstellung einer Maschine stellt in einer Produktionsanlage den schlimmsten Fall dar, da die Effizienz aller Produktionsketten in der Linie beeinträchtigt wird.

Aufgabe der vorliegenden Erfindung ist es, ein Verfahren, ein Computerprogrammprodukt, ein computerlesbares Speichermedium, ein Ressourcenmanagementsystem sowie eine Produktionsanlage zu schaffen, mittels welchen eine effizientere Herstellung eines Produkts realisiert werden kann.

Diese Aufgabe wird durch ein Verfahren, ein Computerprogrammprodukt, ein computerlesbares Speichermedium, ein Ressourcenmanagementsystem sowie eine Produktionsanlage gemäß den unabhängigen Patentansprüchen gelöst. Vorteilhafte Ausgestaltungsformen sind in den Unteransprüchen angegeben.

Ein Aspekt der Erfindung betrifft ein Verfahren zum Betreiben eines Ressourcenmanagementsystems für eine Produktionsanlage für zumindest ein Produkt. Es werden Leistungsmetriken von einer maschinellen Lernplattform der Produktionsanlage für einen Produktionsprozess des Produkts mittels einer ersten Schnittstelle des Ressourcenmanagementsystems empfangen. Es werden Netzwerkdaten für eine Netzwerkeinrichtung der Produktionsanlage für den Produktionsprozess mittels einer zweiten Schnittstelle des Ressourcenmanagementsystems empfangen. Es erfolgt das Empfangen von Maschinendaten von zumindest einer produktionsprozessbeteiligten Maschine der Produktionsanlage mittels einer dritten Schnittstelle des Ressourcenmanagementsystems. Es werden die Leistungsmetriken und die Netzwerkdaten und die Maschinendaten mittels einer elektronischen Recheneinrichtung des Ressourcenmanagementsystems ausgewertet. Es erfolgt das Auswählen einer Konfiguration aus einer Konfigurationsdatenbank des Ressourcenmanagementsystems in Abhängigkeit von der Auswertung. Es wird zumindest ein Steuerbefehl zum Ändern eines Einstellungsparameters der maschinellen Lernplattform und/oder der Netzwerkeinrichtung und/oder zumindest einer beteiligten Maschine in Abhängigkeit von der ausgewählten Konfiguration erzeugt.

Insbesondere kann somit eine Effizienzsteigerung innerhalb der Produktion eines Produkts realisiert werden.

Insbesondere moderne Produktionsanlagen beziehungsweise Fabriken stehen vor einer neuen Herausforderung. Produktionsteile ändern sich entweder schnell nach individuellen Kundenwünsche oder es müssen nur kleine Losgrößen von Produktionsteilen hergestellt werden. Diese moderne Art von Produktionsumgebungen erfordert hochflexible Fertigungsstationen. Um dies zu erreichen und eine hohe Qualität zu gewährleisten, nutzen digitale Fabriken intelligente Systeme zur Überwachung und Steuerung der Produktionsstationen. Ein Beispiel für ein solches System in modernen Produktionsanlagen ist die Automatisierung der Qualitätskontrolle durch maschinengestützte, optische Inspektionen. Für die Automatisierung der optischen Inspektionen steht heute eine Vielzahl von Algorithmen für maschinelles Lernen, insbesondere dargestellt durch die maschinelle Lernplattform, zur Verfügung. Diese Systeme überwachen die Fertigungsanlagen und die gefertigten Teile zum Beispiel durch eine automatische, optische Inspektion. Das Netzwerk, das zum Beispiel die maschinellen Lernplattformen mit dem optischen System verbindet, bleibt jedoch nach der anfänglichen Einrichtung oft in einem Status Quo. Netzwerk-Controller, die das Netzwerk aktiv auf Basis der Informationen über die Quality of Service (QoS) steuern, sind im industriellen Umfeld noch nicht üblich. Darüber hinaus wird nicht nur maschinelles Lernen eingesetzt, um den Betrieb von Produktionslinien zu verbessern, sondern auch digitale Zwillinge, die auf maschinellem Lernen beruhen, werden heutzutage in die Optimierung des Produktionslinienprozesses integriert. Eine einheitliche Steuerung aller beteiligten Ressourcen, insbesondere von Maschinen, Netzwerken, maschinellem Lernen oder digitalen Zwillingsplattformen, gibt es gemäß dem Stand der Technik nicht.

Das Problem ergibt sich aus der Architektur der genannten Ressourcenmanagementsysteme. Jedes System, ob es nun die Fertigungsstation oder das Netz verwaltet, besteht aus einem eigenen Regelkreis. Diese Regelkreise führen ihre Arbeit in ihrer eigenen gekapselten Umgebung aus, ohne Zustände der Daten aus dem Rest des Bereichs zu erkennen. Das Problem dieser monolithischen Systeme ist ihr begrenzter Aktionsradius. So kann beispielsweise ein Netzwerk-Controller, der das Shared-Media-Netzwerk in der Fabrik verwaltet, zum Beispiel ein 5G-Netz, nur innerhalb seiner Umgebung reagieren, das heißt, er kann nur die Netzwerkressourcen steuern. In der Fabrikumgebung kann diese Steuerung der Ressourcensteuerung zu einem vollständigen Stillstand einer Montagelinie führen. Das Netzwerksystem kann beispielsweise nicht genügend Ressourcen für den aktuellen Betriebsmodus der Produktionslinie bereitstellen, sodass die Produktion gestoppt werden muss. Um die Einstellung der derzeitigen Systeme zu überwinden, ist ein Modul und eine Methode vorgeschlagen, die die Information aller beteiligten technologischen Komponenten, insbesondere der Maschinen, Netzwerkeinrichtungen sowie der maschinellen Lernplattformen, integriert. Dies führt insbesondere dazu, dass gegenüber dem Stand der Technik beispielsweise Produktionslinien nicht gestoppt werden müssen, was eine Effizienzsteigerung der Produktionslinie ermöglicht.

Insbesondere sind somit ein Verfahren sowie ein Modul, insbesondere das Ressourcenmanagementsystem, vorgeschlagen, die die Idee eines netzwerk-, maschinenlern- und fertigungsgerechten Ressourcenmanagements umsetzen. Das Ressourcenmanagementsystem sammelt alle relevanten Informationen von den beteiligten Systemkomponenten, das heißt insbesondere von der Netzwerkeinrichtung, den beteiligten Maschinen beziehungsweise Produktionskomponenten, und den Komponenten des maschinellen Lernens beziehungsweise auch einer sogenannten digitalen Zwillingsplattform. Diese Sammlung von Überwachungsinformationen findet kontinuierlich statt. Wenn mehrere Ressourcen zur Verfügung stehen, kann das Ressourcenmanagementsystem den gesamten Fertigungsprozess nach Möglichkeit beschleunigen. Im Allgemeinen kann das Ressourcenmanagementsystem auf der Grundlage der gesammelten Informationen einer Betriebskonfiguration aus einer verfügbaren Konfigurationsdatenbank auswählen, die viele Konfigurationen für unterschiedliche Betriebsgeschwindigkeiten bereitstellt, oder es kann die Ausführung eines Algorithmus zur Ressourcenverwaltung, das heißt insbesondere ein Optimierungssystem, auslösen. Das Ergebnis der Optimierungen sind Aktionen. Diese Aktionen beinhalten die Steuerungsbefehle für die Steuerung aller Komponenten, das heißt des Netzes beziehungsweise Netzwerkeinrichtung, der Maschinen und/oder der maschinellen Lernkomponente. Das heißt, das Ressourcenmanagementsystem bietet auch Schnittstellen zu den entsprechenden Komponenten. Als Ergebnis nehmen die Anlagenbetreiber einen unterbrechungsfreien Betrieb ihrer Anlagen wahr und nicht einen Betrieb, der ganze Fertigungsprozesse anhält.

Insbesondere ist somit eine Systemarchitektur vorgeschlagen, die das maschinelle Lernen, Fertigung und Netzwerke berücksichtigt. Erfindungsgemäß ist eine automatische und gemeinsame Optimierung eines industriellen Fabrikszenarios bereitgestellt. Eine Systemsteuerung mit entsprechenden drei Schnittstellen zur Anbindung an die kritische Infrastruktur ist dabei vorgesehen, um von einer netzwerkfähigen zu einer fertigungsfähigen Systemsteuerung zu gelangen. Jede der Schnittstellen dient insbesondere dazu, Daten für einen der drei genannten Aspekte, insbesondere Fertigung, Netzwerk und maschinelle Lernplattform, zu sammeln. Es ist zu beachten, dass hierbei auch mit einer digitalen Zwillingsplattform das Ressourcenmanagementsystem verbunden werden kann. Die digitale Zwillingsplattform kann dabei maschinelle Lernmodule umfassen. Im Gegensatz zum Stand der Technik führt die vorgeschlagene Architektur eine gemeinsame Optimierung in der gesamten Produktionsanlage beziehungsweise Fabrik ein.

Gemäß einer vorteilhaften Ausgestaltungsform werden als Leistungsmetriken Qualitätssicherungsmerkmale einer Überwachungseinrichtung der Produktionsanlage empfangen. Insbesondere sammelt somit die erste Schnittstelle Metriken zur Leistung von aufgabenkritischen Maschinenlern-Anwendungen beziehungsweise künstlichen Intelligenzanwendungen. Aufgabenkritisch bedeutet, dass bestimmte Schritte in eine Lieferkette nur mit angemessener Leistung, beispielsweise Genauigkeit, der jeweiligen Anwendung ausgeführt werden können. Die Qualität des Ergebnisses der maschinellen Lern-Anwendung ist der entscheidende Faktor für die entsprechenden Auswerteverfahren, ob ein Ressourcenmanagement im Netz oder in der Produktionsanlage erforderlich ist. Da es sich bei der künstlichen Intelligenz-Anwendung um ein geschlossenes System handelt, empfängt hierbei die erste Schnittstelle insbesondere Daten nur in eine Richtung. Ein Beispiel für ein solches Szenario ist beispielsweise die automatisierte, optische Inspektion in einer Montagelinie. Kamerasysteme können mithilfe von maschinellem Lernen bestimmte Qualitätssicherungsaufgaben automatisieren, um Fehler in gefertigten Teilen zu erkennen. Somit ermöglicht es die erste Schnittstelle der elektronischen Recheneinrichtung maschinenlernfähig zu sein. Insbesondere ermöglicht die Schnittstelle eine Metriksammlung/Steuerung externer ML/KI Anwendungen. Das Ressourcenmanagement System an sich ist maschinenlernfähig auch mittels dieser Schnittstelle.

Gemäß einer weiteren vorteilhaften Ausgestaltungsform werden als Netzwerkdaten eine genutzte Bandbreite der Netzwerkeinrichtung und/oder eine Latenzzeit der Netzwerkeinrichtung empfangen. Insbesondere spielt die Netzwerkeinrichtung und das daraus resultierende Netzwerk eine entscheidende Rolle in modernen industriellen Produktionsanlagen im Allgemeinen. Es ist hierbei eine Verbindung mit einer hohen Bandbreite und geringer Latenzzeit für Maschinenlernaufgaben und Steuerungsaufgaben bereitzustellen. Daher wird die zweite Schnittstelle eingerichtet, um den Zustand der Netzwerkeinrichtung zu überwachen. Da das Netz möglicherweise keine QoS-Funktionen bietet, von anderen Anwendungen genutzt wird oder auf ein gemeinsames genutztes Medium angewiesen ist, ist die Überwachung und Anbindung an das Netz von entscheidender Bedeutung. Einige Beispiele für diese Metriken sind insbesondere die genutzte Bandbreite sowie die Latenzzeit. Die Schnittstelle empfängt nicht nur Daten in eine Richtung, sondern kann auch mit den Netzelementen kommunizieren. Auf diesem Weg kann die elektronische Recheneinrichtung Teile der Netzwerkeinrichtung bei einer Verschlechterung des Dienstes steuern.

Eine weitere Ausgestaltungsform sieht vor, dass auf Basis der Auswertung ein Steuerbefehl für eine Rekonfiguration der Netzwerkeinrichtung, insbesondere eine Neuordnung einer Slice-Belegung der Netzwerkeinrichtung, erzeugt wird. Slices bezeichnen dabei die Zeitschlitze, die einem Gerät zum Senden von Daten zur Verfügung stehen. Je größer der Slice, desto mehr Daten können pro Zeiteinheit gesendet werden. Beispielsweise kann somit die elektronische Recheneinrichtung die Slice-Belegung für ein gemeinsames genutztes Medium, beispielsweise ein 5G-Slice neu anordnen. Diese Neuordnung hilft einer verschlechterten Aufgabe, ein bestimmtes QoS-Ziel wieder zu erreichen, während gleichzeitig realisiert werden kann, dass keine anderen parallelen Aufgaben verschlechtert werden, was den Gesamtdurchsatz und die Effizienz verbessert.

Ebenfalls vorteilhaft ist, wenn auf Basis der Auswertung ein Steuerbefehl für eine Erhöhung einer Bandbreite für eine maschinelle Lernleistung für die zumindest eine Maschine erzeugt wird. Insbesondere da bestimmte Netzwerkarchitekturen nur einen begrenzten Spielraum für das Ressourcenmanagement bieten, ist eine separate dritte Schnittstelle zu den Fertigungsgeräten, insbesondere der zumindest einen Maschine, als Ausweichmöglichkeit erforderlich. Ein kritischer Punkt ist der Pufferzustand zwischen beispielsweise zwei Robotern. Dabei können sowohl die Roboter als auch der Puffer selbst als an dem Produktionsprozess beteiligte Maschine angesehen werden. Im Falle eines Über- oder Unterlaufs muss einer der beiden Roboter warten, bis beispielsweise der andere ihn eingeholt hat. Gegenmaßnahmen im Netz können bis zu einem gewissen Grad helfen, indem beispielsweise der langsameren Maschine mehr Bandbreite für eine bessere maschinelle Lernleistung zur Verfügung gestellt wird. Es ist selbstverständlich für den Fachmann, dass auch weitere Ausgestaltungen mit beispielsweise mehrerer Robotern oder Puffern, sowie anderen Maschinen mitgelesen werden können.

Es hat sich weiterhin als vorteilhaft erwiesen, wenn auf Basis der Auswertung ein Steuerbefehl für eine Reduzierung einer Produktionsgeschwindigkeit für die zumindest eine Maschine erzeugt wird. Beispielweise sollten alle netzbezogenen Optionen erschöpft sein, so können auch die Maschinen an diesem Ressourcenmanagement ebenfalls mitteilnehmen. Jede Maschine kann beispielsweise die Geschwindigkeit der Produktion so anpassen, dass beispielsweise ein Puffer gefüttert bleibt. Diese Methode bietet den größten Spielraum für Anpassungen, bietet jedoch lediglich eine letzte Auswahlmöglichkeit und sollte somit nur im Bedarfsfall eingesetzt werden. Der Grund dafür ist, dass im Gegensatz zur Verwaltung der Netze in diesem Fall die erreichbare Gesamteffizienz der Fertigungsstation sinkt, während auf der anderen Seite nur die Anpassung des Netzes potentiell alle Maschinen mit voller Geschwindigkeit laufen lässt.

Eine weitere vorteilhafte Ausgestaltungsform sieht vor, dass auf der Konfigurationsdatenbank eine Vielzahl von unterschiedlichen Betriebsstrategien bereitgestellt wird und in Abhängigkeit von der Auswertung eine an eine aktuelle Situation angepasste Betriebsstrategie ausgewählt wird. Insbesondere kann die Konfigurationsdatenbank aktuelle Werte darüber abspeichern, wie die Systemsteuerung mit ihrer Umgebung interagiert und diese beeinflusst. Diese Werte überwachen das Verhalten der Anlagensteuerung in bestimmten Szenarien. Die Konfigurationsdatenbank stellt auch ein Einflusspunkt auf den Regelkreis dar, der es ermöglicht, einen Handlungsspielraum des System-Controllers, also der elektronischen Recheneinrichtung, über seine verschiedenen Schnittstellen zu anderen Komponenten zu begrenzen.

Ferner hat es sich als vorteilhaft erwiesen, wenn die aktuell empfangenen Leistungsmetriken und Netzwerkdaten und Maschinendaten mit der ausgewählten Konfiguration abgespeichert werden und bei einem zukünftigen Betrieb des Ressourcenmanagementsystems berücksichtigt werden. Insbesondere speichert somit die Konfigurationsdatenbank Lösungen für Ressourcenprobleme. In einem ähnlichen Fall kann somit die elektronische Recheneinrichtung nach einer früheren Lösung suchen und diese entsprechend anwenden.

Ferner hat es sich als vorteilhaft erwiesen, wenn die aktuell empfangenen Leistungsmetriken und Netzwerkdaten und Maschinendaten an eine externe elektronische Recheneinrichtung übertragen werden. Dabei kann ferner vorgesehen sein, dass zumindest eine externe Konfiguration zu den aktuellen Leistungsmetriken und Netzwerkdaten und Maschinendaten von der externen elektronischen Recheneinrichtung empfangen wird und in Abhängigkeit von der externen Konfiguration der zumindest eine Steuerbefehl erzeugt wird. Hierbei kann ferner vorgesehen sein, dass die zumindest eine externe Konfiguration von der Konfigurationsdatenbank abgespeichert wird und bei einem zukünftigen Betrieb berücksichtigt wird. Somit weist insbesondere die elektronische Recheneinrichtung beziehungsweise das Ressourcenmanagementsystem eine vierte Schnittstelle zur Ressourcenverwaltung auf. Wenn beispielsweise die elektronische Recheneinrichtung keine vernünftige Lösung entwickeln kann oder in der Konfigurationsdatenbank nichts gespeichert ist, bietet diese Schnittstelle ein Gateway zu einem externen Verwaltungssystem. In diesem Fall sendet die elektronische Recheneinrichtung den Systemzustand an die externe elektronische Recheneinrichtung, um das bestehende Problem zu lösen. Wenn die externe elektronische Rechenreinrichtung das Problem lösen kann, wird es zu einer späteren Verwendung in der Konfigurationsdatenbank gespeichert.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ebenfalls betrifft die Erfindung auch ein computerlesbares Speichermedium mit zumindest einem Computerprogrammprodukt nach dem vorhergehenden Aspekt.

Ein weiterer Aspekt der Erfindung betrifft ein Ressourcenmanagementsystem für eine Produktionsanlage für zumindest ein Produkt, mit zumindest einer ersten Schnittstelle, einer zweiten Schnittstelle, einer dritten Schnittstelle und einer elektronischen Recheneinrichtung, wobei das Ressourcenmanagementsystem zum Durchführen eines Verfahrens nach dem vorhergehenden Aspekt ausgebildet ist. Insbesondere wird das Verfahren mittels des Ressourcenmanagementsystems durchgeführt.

Die elektronische Recheneinrichtung weist beispielsweise Prozessoren, Schaltkreise, insbesondere integrierte Schaltkreise, sowie weitere elektronische Bauteile auf, um entsprechende Verfahrensschritte durchführen zu können.

Ferner betrifft die Erfindung auch eine Produktionsanlage für zumindest ein Produkt, mit zumindest einer maschinellen Lernplattform, mit einer Netzwerkeinrichtung, mit einer an einem Produktionsprozess des Produkts beteiligten Maschine und mit einem Ressourcenmanagementsystem nach dem vorhergehenden Aspekt.

Vorteilhafte Ausgestaltungsformen des Verfahrens sind als vorteilhafte Ausgestaltungsformen des Computerprogrammprodukts, des computerlesbaren Speichermediums, des Ressourcenmanagementsystems sowie der Produktionsanlage anzusehen. Das Ressourcenmanagementsystem sowie die Produktionsanlage weisen hierzu insbesondere gegenständliche Merkmale auf, um entsprechende Verfahrensschritte durchführen zu können.

Unter einer Recheneinheit/elektronischer Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Dabei zeigen:
- FIG 1: ein schematisches Blockschaltbild gemäß einer Ausführungsform einer Produktionsanlage mit einer Ausführungsform eines Ressourcenmanagementsystem;
- FIG 2: ein schematisches Ablaufdiagramm gemäß einer Ausführungsform eines erfindungsgemäßen Verfahrens;
- FIG 3: ein weiteres schematisches Ablaufdiagramm gemäß einer weiteren Ausführungsform des Verfahrens; und
- FIG 4: ein weiteres schematisches Blockschaltbild gemäß einer Ausführungsform der Produktionsanlage mit einer Ausführungsform des Ressourcenmanagementsystems.

In den Figuren sind gleiche oder funktionsgleiche Elemente mit den gleichen Bezugszeichen versehen.

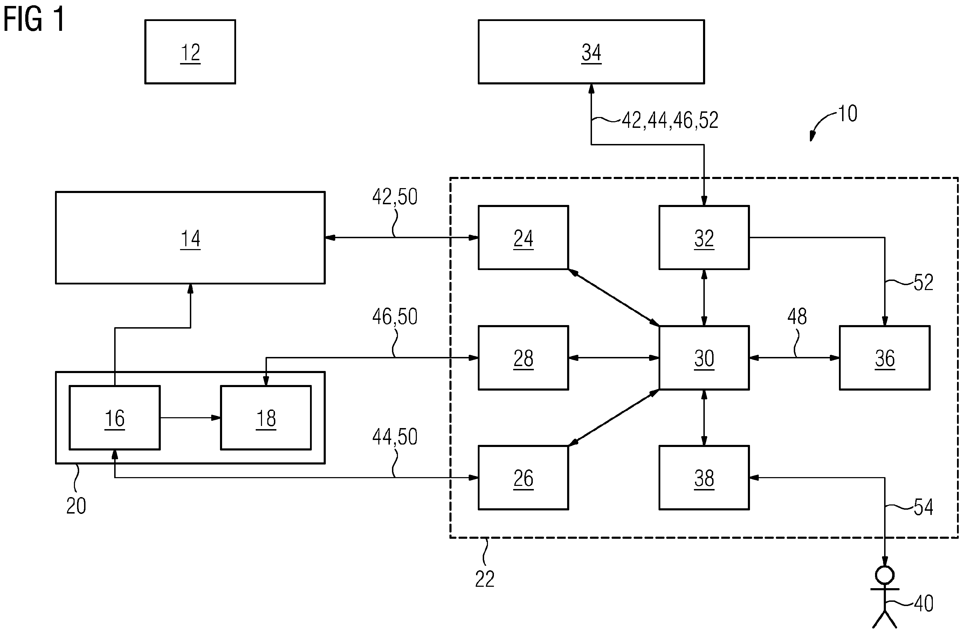

FIG 1 zeigt ein schematisches Blockschaltbild gemäß einer Ausführungsform einer Produktionsanlage 10 für zumindest ein Produkt 12. Die Produktionsanlage 10 weist zumindest eine maschinelle Lernplattform 14, eine Netzwerkeinrichtung 16 sowie zumindest eine an einem Produktionsprozess des Produkts 12 beteiligte Maschine 18 auf. Insbesondere die Netzwerkeinrichtung 16 sowie die an dem Produktionsprozess beteiligte Maschine 18 bilden eine sogenannte Produktionsumgebung 20. Des Weiteren weist die Produktionsanlage 10 zumindest ein Ressourcenmanagementsystem 22 auf.

Das Ressourcenmanagementsystem 22 weist wiederum eine erste Schnittstelle 24, eine zweite Schnittstelle 26 sowie eine dritte Schnittstelle 28 auf. Ferner weist das Ressourcenmanagementsystem 22 zumindest eine elektronische Recheneinrichtung 30 auf. Ferner zeigt die FIG 1, dass das Ressourcenmanagementsystem 22 ferner eine vierte Schnittstelle 32 zum Kommunizieren mit einer externen elektronischen Recheneinrichtung 34 aufweist. Des Weiteren kann das Ressourcenmanagementsystem 22 eine Konfigurationsdatenbank 36 sowie eine Eingabebeziehungsweise Ausgabeeinrichtung 38 für eine Person 40 aufweisen.

Insbesondere kann mittels des Ressourcenmanagementsystems 22 somit ein Verfahren zum Betreiben des Ressourcenmanagementsystems für eine Produktionsanlage durchgeführt werden, bei welchem Leistungsmetriken 42 von der maschinellen Lernplattform 14 mittels der ersten Schnittstelle 24 empfangen werden. Ferner werden Netzwerkdaten 44 von der Netzwerkeinrichtung 16 mittels der zweiten Schnittstelle 26 empfangen. Des Weiteren werden Maschinendaten 46 von der zumindest einen am Produktionsprozess beteiligten Maschine 18 empfangen.

Es erfolgt das Auswerten der Leistungsmetriken 42 und der Netzwerkdaten 44 und der Maschinendaten 46 mittels der elektronischen Recheneinrichtung 30. Es wird eine Konfiguration aus der Konfigurationsdatenbank 48 aus einer Konfigurationsdatenbank des Ressourcenmanagementsystems 22 in Abhängigkeit von der Auswertung ausgewählt. Es erfolgt das Erzeugen von zumindest einem Steuerbefehl 50 zum Ändern eines Einstellungsparameters der maschinellen Lernplattform 14 und/oder der Netzwerkeinrichtung 16 und/oder zumindest einer beteiligten Maschine 18 in Abhängigkeit von der ausgewählten Konfiguration 48.

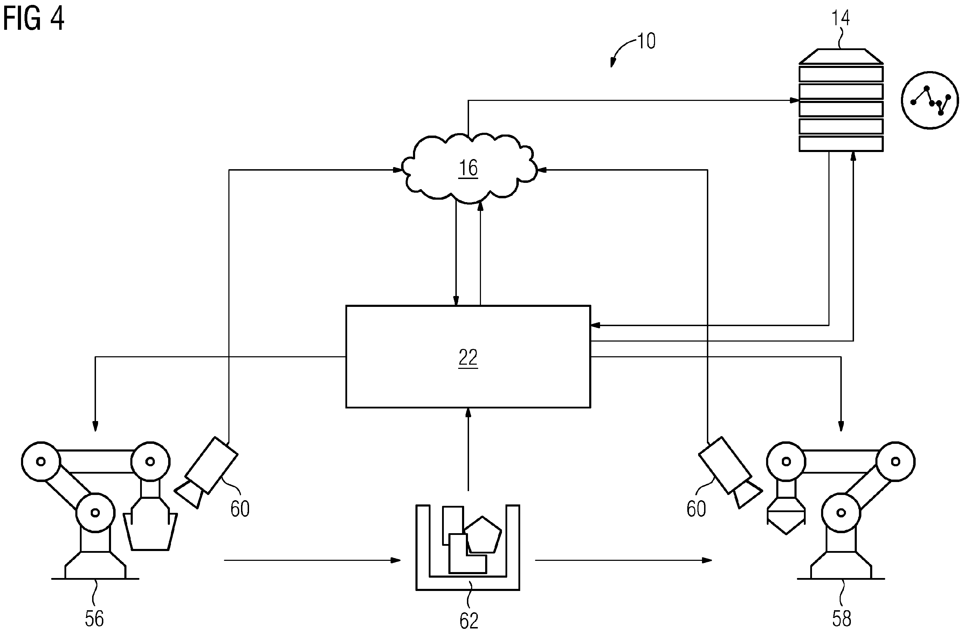

Insbesondere kann vorgesehen sein, dass als Leistungsmetriken 42 Qualitätssicherungsmerkmale einer Überwachungseinrichtung 60 (FIG 4) der Produktionsanlage 10 empfangen werden. Ferner können als Netzwerkdaten 44 eine genutzte Bandbreite der Netzwerkeinrichtung 16 und/oder eine Latenzzeit der Netzwerkeinrichtung 16 empfangen werden. Ferner kann vorgesehen sein, dass auf Basis der Auswertung ein Steuerbefehl 50 für eine Neuordnung einer Slice-Belegung der Netzwerkeinrichtung 16 erzeugt wird. Ebenfalls kann vorgesehen sein, dass auf Basis der Auswertung ein Steuerbefehl 50 für eine Erhöhung einer Bandbreite für eine maschinelle Lernleistung für die zumindest eine Maschine 18 erzeugt wird. Des Weiteren kann vorgesehen sein, dass auf Basis der Auswertung ein Steuerbefehl 50 für eine Reduzierung einer Produktionsgeschwindigkeit für die zumindest eine Maschine 18 erzeugt wird.

Ferner kann vorgesehen sein, dass auf der Konfigurationsdatenbank 36 eine Vielzahl von unterschiedlichen Betriebsstrategien bereitgestellt wird und in Abhängigkeit von der Auswertung eine der aktuellen Situation angepasste Betriebsstrategie ausgewählt wird. Ebenfalls kann vorgesehen sein, dass die aktuell empfangenen Leistungsmetriken 42 und Netzwerkdaten 44 und Maschinendaten 46 mit der ausgewählten Konfiguration 48 abgespeichert werden und bei einem zukünftigen Betrieb des Ressourcenmanagementsystems 22 berücksichtigt werden.

Des Weiteren zeigt die FIG 1 insbesondere, dass die aktuell empfangenen Leistungsmetriken 42 und Netzwerkdaten 44 und Maschinendaten 46 an die externe elektronische Recheneinrichtung 34 übertragen werden können, wobei zumindest eine externe Konfiguration 52 zu den aktuellen Leistungsmetriken 42 und Netzwerkdaten 44 und Maschinendaten 46 von der externen elektronischen Recheneinrichtung 34 empfangen wird und in Abhängigkeit von der externen Konfiguration 52 der zumindest eine Steuerbefehl 50 erzeugt wird. Dabei kann vorgesehen sein, dass die zumindest eine externe Konfiguration 52 von der Konfigurationsdatenbank 36 abgespeichert wird und bei einem zukünftigen Betrieb berücksichtigt wird.

Ferner kann vorgesehen sein, dass der Nutzer 40 Eingabe- beziehungsweise Ausgabesignale 54 über die Eingabe- beziehungsweise Ausgabeeinrichtung 38 eingeben beziehungsweise ausgeben kann.

Insbesondere zeigt somit die FIG 1, dass die erste Schnittstelle Metriken zur Leistung von aufgabenkritischen ML/KI-Anwendungen aufweist (ML = maschinelles Lernen; KI = künstliche Intelligenz). Aufgabenkritisch bedeutet, dass bestimmte Schritte in einer Lieferkette nur mit angemessener Leistung, das heißt insbesondere Genauigkeit, der jeweiligen Anwendung ausgeführt werden können. Die Qualität des Ergebnisses der ML-Anwendung ist der entscheidende Faktor für die elektronische Recheneinrichtung 30, ob ein Ressourcenmanagement im Netz oder in der Produktionsanlage 10 erforderlich ist. Da es sich bei KI-Anwendungen um ein geschlossenes System handelt, empfängt die erste Schnittstelle 24 Daten nur in eine Richtung. Ein Beispiel für ein solches Szenario ist die automatische, optische Inspektion ein einer Montagelinie. Kamerasysteme können mithilfe von maschinellem Lernen bestimmte Qualitätssicherungsaufgaben automatisieren, um Fehler in gefertigten Teilen zu erkennen. Wie bereits erwähnt, ermöglicht es die erste Schnittstelle 24 somit der elektronischen Recheneinrichtung 30, maschinenlernfähig zu sein.

Die Netzwerkeinrichtung 16 spielt ebenfalls eine entscheidende Rolle in dem beschriebenen Ausführungsbeispiel und in modernen industriellen Fertigungsanlagen im Allgemeinen. Es müssen daher Verbindungen mit hoher Bandbreite und geringer Latenzzeit für die maschinellen Lernaufgaben und die Steuerungsaufgaben bereitgestellt werden. Daher ist die zweite Schnittstelle 26 vorgesehen, um den Zustand der Netzwerkeinrichtung 16 zu überwachen. Da das Netz möglicherweise keine QoS-Funktionen bietet, von anderen Anwendungen genutzt wird oder auf ein gemeinsames genutztes Medium angewiesen ist, ist die Überwachung und Anbindung an das Netz sehr entscheidend. Als Beispiel für die Metriken sind insbesondere die genutzte Bandbreite sowie die Latenzzeit anzusehen. Die zweite Schnittstelle 26 empfängt nicht nur Daten in eine Richtung, sondern kann auch mit den Netzelementen kommunizieren. Auf diesem Weg kann die elektronische Recheneinrichtung 30 Teile der Netzwerkeinrichtung 16 bei einer Verschlechterung des Dienstes steuern. So kann beispielsweise die elektronische Recheneinrichtung 30 eine Slice-Belegung für ein gemeinsames genutztes Medium, beispielsweise ein 5G-Slice, neu anordnen. Diese Neuanordnung hilft einer verschlechterten Aufgabe, ein bestimmtes QoS-Ziel wieder zu erreichen, wenn gleichzeitig sichergestellt wird, dass keine anderen parallelen Aufgaben verschlechtert werden, was den Gesamtdurchsatz und die Effizienz verbessert.

Da bestimmte Architekturen nur einen begrenzten Spielraum für das Ressourcenmanagement bieten, ist die dritte Schnittstelle 28 vorgesehen, mit Verbindung zu denen Fertigungsgeräten beziehungsweise der Maschine 18 oder den Maschinen 18 als Ausweichmöglichkeit. Ein kritischer Punkt kann beispielsweise ein Pufferzustand eines Puffers 62 (FIG 4) zwischen zwei Robotern 56, 58 (FIG 4) angesehen werden. Der Pufferzustand sowie die Roboter 56, 58 bilden dabei insbesondere entsprechende Maschinen 18. Im Falle eines Über- beziehungswiese Unterlaufs muss wiederum einer der Roboter 56, 58 warten, bis der andere ihn eingeholt hat. Gegenmaßnahmen im Netzwerk können bis zu einem gewissen Grad helfen, indem beispielsweise langsamere Maschinen 18 mehr Bandbreite für eine bessere maschinelle Lernleistung zur Verfügung gestellt wird. Sind jedoch alle netzbezogenen Optionen erschöpft, können die Maschinen 18 an diesem Ressourcenmanagement teilnehmen. Jede Maschine 18 kann ihre Geschwindigkeit so anpassen, dass der Puffer 62 gefüttert bleibt. Diese Methode bietet den größten Spielraum für Anpassungen, sollte aber jedoch nur im Bedarfsfalle eingesetzt werden. Der Grund dafür ist, dass im Gegensatz zur Verwaltung der Netze in diesem Fall die erreichbare Gesamteffizienz der Fertigungsstation sinkt, während auf der anderen Seite nur die Anpassung des Netzes potenziell alle Maschinen 18 mit voller Geschwindigkeit laufen lässt.

Die Konfigurationsdatenbank 36 speichert aktuelle Werte darüber, wie die Systemsteuerung beziehungsweise die elektronische Recheneinrichtung 30 mit ihrer Umgebung interagiert und diese beeinflusst. Diese Werte überwachen das Verhalten der Anlagensteuerung in bestimmten Szenarien. Die Konfigurationsdatenbank 36 stellt auch einen Einflusspunkt auf den Regelkreis dar, da er es ermöglicht, den Handlungsspielraum des System-Controllers beziehungsweise elektronischen Recheneinrichtung 30 über seine verschiedenen Schnittstellen 24, 26, 28 zu den anderen Komponenten zu begrenzen. Darüber hinaus speichert die Konfigurationsdatenbank 36 Lösungen für frühere Ressourcenprobleme. In einem ähnlichen Fall kann die Kernlogik, also die elektronische Recheneinrichtung 30, nach einer früheren Lösung suchen und diese auch anwenden.

Sollte die elektronische Recheneinrichtung 30 beispielsweise keine vernünftige Lösung entwickeln oder in der Konfigurationsdatenbank 36 nichts gespeichert sein, so bietet die vierte Schnittstelle 32 ein Gateway zu der externen elektronischen Recheneinrichtung 34 als externes Verwaltungssystem. In diesem Fall sendet die elektronische Recheneinrichtung 30 den Systemzustand an die externe elektronische Recheneinrichtung 34, um das bestehende Problem zu lösen. Wenn die externe elektronische Recheneinrichtung 34 das Problem lösen kann, wird es zur späteren Verwendung in der Konfigurationsdatenbank 36 gespeichert.

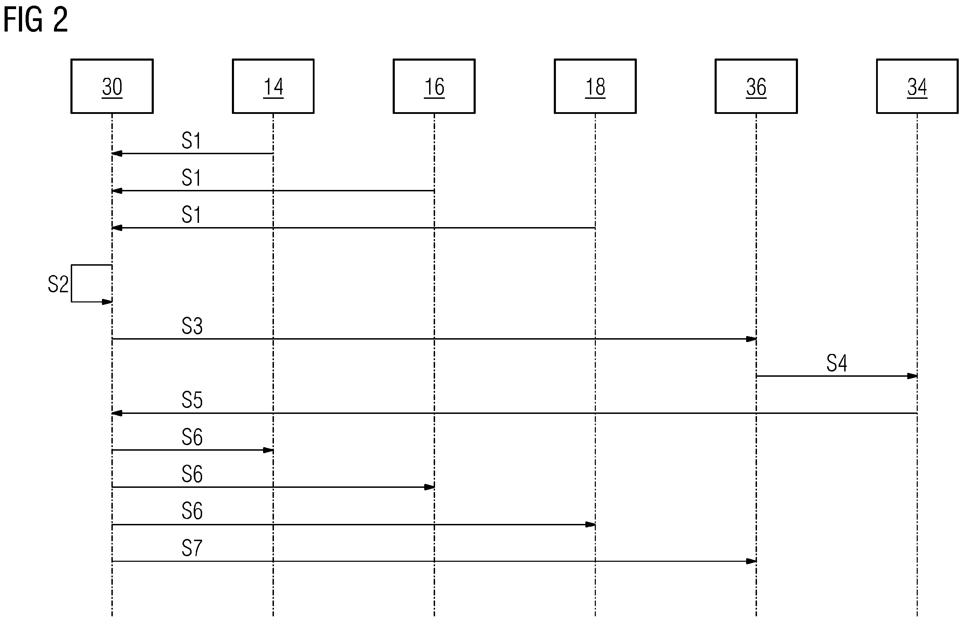

FIG 2 zeigt ein schematisches Ablaufdiagramm gemäß einer Ausführungsform des Verfahrens. Insbesondere zeigt die FIG 2 einen verwalteten Vorgang mit einer externen Lösung. Die externe elektronische Recheneinrichtung 34 wird verwendet, um eine Lösung zu finden. In einem ersten Schritt S1 sammelt die elektronische Recheneinrichtung 30 die Daten von allen angeschlossenen Geräten, insbesondere von der maschinellen Lernplattform 14, der Netzwerkeinrichtung 16 sowie der Maschine 18. In einem zweiten Schritt S2 erfolgt wiederum intern die Analyse dieser Daten, wobei in einem dritten Schritt S3 die elektronische Recheneinrichtung 30 wiederum von der Konfigurationsdatenbank 36 eine Lösung anfragt. Im vorliegenden Ausführungsbeispiel kann die Konfigurationsdatenbank 36 keine Lösung finden und fragt daher in einem vierten Schritt S4 die externe elektronische Recheneinrichtung 34 an. In einem fünften Schritt S5 sendet wiederum die externe elektronische Recheneinrichtung 34 die zumindest eine externe Konfiguration 52 an die elektronische Recheneinrichtung 30 zurück. In einem sechsten Schritt S6 werden dann wiederum die entsprechenden Einstellparameter an die Geräte, insbesondere die maschinelle Lernplattform 14, die Netzwerkeinrichtung 16 sowie die Maschine 18, gesendet. In einem siebten Schritt S7 fordert wiederum die elektronische Recheneinrichtung 30 die Konfigurationsdatenbank 36 auf, die übermittelte, externe Konfiguration 52 abzuspeichern und zukünftig bereitzustellen.

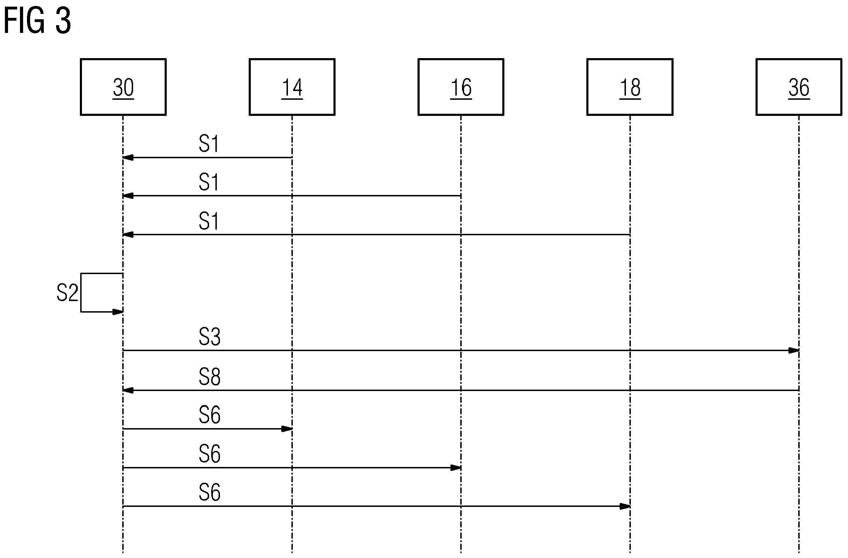

FIG 3 zeigt ein weiteres Ausführungsbeispiel für das erfindungsgemäße Verfahren, wobei vorliegend die Konfigurationsdatenbank 36 eine interne Lösung bereitstellt, sodass keine externe Kommunikation erforderlich ist. Insbesondere erfolgen somit die Schritte S1 bis S3 wie bereits zum Verfahren in der FIG 2 beschrieben. Nach dem dritten Schritt S3 erfolgt ein achter Schritt S8, welcher die Konfiguration 48 an die elektronische Recheneinrichtung 30 übermittelt. Es werden dann wiederum nach dem achten Schritt S8 der sechste Schritt S6 gemäß Fig. 2 durchgeführt und die entsprechenden Einstellparameter an die Geräte, insbesondere die maschinelle Lernplattform 14, die Netzwerkeinrichtung 16 sowie die Maschine 18, übermittelt.

FIG 4 zeigt ein weiteres schematisches Blockschaltbild gemäß einer Ausführungsform der Produktionsanlage 10. Insbesondere ist die Überwachungseinrichtung 60 vorliegend als Kamera ausgebildet. Des Weiteren ist der Puffer 62 zwischen dem ersten Roboter 56 und dem zweiten Roboter 58 gezeigt. Insbesondere ist somit ein konkretes Beispiel zur Anwendung der bereits beschriebenen Erfindung in einer einfachen Industrieumgebung dargestellt, die alle für den Betrieb erforderlichen Elemente enthält. Dieses Beispiel besteht wiederum aus den zwei Robotern 56, 58, die gemeinsame Teile herstellen. Ferner ist ein Puffer 62 als Zwischenpuffer dargestellt. Beide Roboter 56, 58 verwenden Bildverarbeitungssysteme, die in einem externen Server ausgelagert sind, um ihre entsprechenden Aufgaben zu erfüllen. Die Kameras und der Server sind über ein Netzwerk verbunden, das auch ein gemeinsames Medium, wie beispielsweise 5G, umfasst. Wie auf den vorherigen Zeichnungen beschrieben, sind das Fertigungssystem, das Netzwerk und die Plattform für das maschinelle Lernen mit der elektronischen Recheneinrichtung 30 verbunden, auf der der entsprechende Algorithmus läuft. Im Falle von Netzwerkproblemen kann die elektronische Recheneinrichtung 30 zum Beispiel die Arbeitsgeschwindigkeit beider Roboter 56, 58 drosseln. In diesem Fall wird der Gesamtbetrieb des Systems nicht unterbrochen. Der Aufwand, die Produktion vollständig zu stoppen und dann von Grund auf neu zu starten, entfällt somit.

Die Erfindung umfasst ebenfalls die Kommunikation mit einer digitalen Zwillingsplattform. Insbesondere zukünftige Fabriken werden digitale Zwillinge integrieren. Solche digitalen Zwillinge können auch Komponenten des maschinellen Lernens integrieren und somit eine Alternative zur maschinellen Lernplattform 14 darstellen. Daher kann diese Erfindung auch mit digitalen Zwillingsplattformen verbunden werden, die maschinelle Lernkomponenten verwenden. Die elektronische Recheneinrichtung 30 wird dann auch die Ressourcenmanagementinformationen und -fähigkeiten der digitalen Zwillingsplattform in den Optimierungsprozess integrieren. Wenn die digitale Zwillingsplattform verschiedene Betriebsmodi anbietet, kann die elektronische Recheneinrichtung 30 die Plattform informieren, damit sie sich an die von der elektronischen Recheneinrichtung 30 vorgeschlagenen Anforderungen anpasst. Die Kombination mit der digitalen Zwillingsplattform kann als ergänzender Aspekt beziehungsweise auch als unabhängiger Aspekt der Erfindung betrachtet werden.

Insbesondere bietet die in den FIG 1 bis FIG 4 vorgeschlagene Erfindung die Vorteile der nahtlosen, automatisierten Betriebsmöglichkeit von beispielsweise drei Komponenten, die an zukünftigen Produktionssystemen beteiligt sind. Diese drei Komponenten sind dabei die Maschine 18, die Netzwerkeinrichtung 16 und die maschinelle Lernplattform 14 beziehungsweise die digitalen Zwillingsplattformen. Anstatt die Produktion zu stoppen, kann die Produktion gedrosselt werden. Also kann ein unterbrechungsfreier Betrieb von Industrieanlagen herbeigeführt werden, was zu einer höheren Systemauslastung führt. Ferner kann eine adaptive Prozessdrosselung zur Vermeidung von Ressourcenverschwendung durchgeführt werden, das heißt, insbesondere während der Drosselung werden die Ressourcen freigegeben. Des Weiteren sind Konfigurationen für den Betrieb aller Komponenten leicht verfügbar. Es kann auch zu einer Optimierung der Laufzeit kommen, falls dies erforderlich wird. Ebenfalls ist es nicht nötig, die Maschine 18 vollständig anzuhalten, sondern nur den Prozess zu verlangsamen. Somit kann eine vereinfachte, menschliche Interaktion realisiert werden.

## Patentansprüche

1. Verfahren zum Betreiben eines Ressourcenmanagementsystems (22) für eine Produktionsanlage (10) für zumindest ein Produkt (12), mit den Schritten:
- Empfangen von Leistungsmetriken (42) von einer maschinellen Lernplattform (16) der Produktionsanlage (10) für einen Produktionsprozess des Produkts (12) mittels einer ersten Schnittstelle (24) des Ressourcenmanagementsystems (22);
- Empfangen von Netzwerkdaten (44) von einer Netzwerkeinrichtung (16) der Produktionsanlage (10) für den Produktionsprozess mittels einer zweiten Schnittstelle (26) des Ressourcenmanagementsystems (22);
- Empfangen von Maschinendaten (46) von zumindest einer am Produktionsprozess beteiligten Maschine (18) der Produktionsanlage (10) mittels einer dritten Schnittstelle (28) des Ressourcenmanagementsystems (22);
- Auswerten der Leistungsmetriken (42) und der Netzwerkdaten (44) und der Maschinendaten (46) mittels einer elektronischen Recheneinrichtung (30) des Ressourcenmanagementsystems (22);
- Auswählen einer Konfiguration (48) aus einer Konfigurationsdatenbank (36) des Ressourcenmanagementsystems (22) in Abhängigkeit von der Auswertung; und
- Erzeugen von zumindest einem Steuerbefehl (50) zum Ändern eines Einstellungsparameters der maschinellen Lernplattform (14) und/oder der Netzwerkeinrichtung (16) und/oder der zumindest einem beteiligten Maschine (18) in Abhängigkeit von der ausgewählten Konfiguration (48).

2. Verfahren nach Anspruch 1, **dadurch gekennzeichnet, dass** als Leistungsmetriken (42) Qualitätssicherungsmerkmale einer Überwachungseinrichtung (60) der Produktionsanlage (10) empfangen werden.

3. Verfahren nach Anspruch 1 oder 2, **dadurch gekennzeichnet, dass**
als Netzwerkdaten (46) eine genutzte Bandbreite der Netzwerkeinrichtung (16) und/oder eine Latenzzeit der Netzwerkeinrichtung (16) empfangen werden.

4. Verfahren nach einem der vorhergehenden Ansprüche, **dadurch gekennzeichnet, dass**
auf Basis der Auswertung ein Steuerbefehl (50) für eine Rekonfiguration der Netzwerkeinrichtung (16), insbesondere eine Neuordnung einer Slice-Belegung der Netzwerkeinrichtung (16), erzeugt wird.

5. Verfahren nach einem der vorhergehenden Ansprüche, **dadurch gekennzeichnet, dass**
auf Basis der Auswertung ein Steuerbefehl (50) für eine Erhöhung einer Bandbreite für eine maschinelle Lernleistung für die zumindest eine Maschine (18) erzeugt wird.

6. Verfahren nach einem der vorhergehenden Ansprüche, **dadurch gekennzeichnet, dass**
auf Basis der Auswertung ein Steuerbefehl (50) für eine Reduzierung einer Produktionsgeschwindigkeit für die zumindest eine Maschine (18) erzeugt wird.

7. Verfahren nach einem der vorhergehenden Ansprüche, **dadurch gekennzeichnet, dass**
auf der Konfigurationsdatenbank (36) eine Vielzahl von unterschiedlichen Betriebsstrategien bereitgestellt wird und in Abhängigkeit von der Auswertung eine an eine aktuelle Situation angepasste Betriebsstrategie ausgewählt wird.

8. Verfahren nach einem der vorhergehenden Ansprüche, **dadurch gekennzeichnet, dass**
die aktuell empfangenen Leistungsmetriken (42) und Netzwerkdaten (44) und Maschinendaten (46) mit der ausgewählten Konfiguration (48) abgespeichert werden und bei einem zukünftigen Betrieb des Ressourcenmanagementsystems (22) berücksichtigt werden.

9. Verfahren nach einem der vorhergehenden Ansprüche, **dadurch gekennzeichnet, dass**
die aktuell empfangenen Leistungsmetriken (42) und Netzwerkdaten (44) und Maschinendaten (48) an eine externe elektronische Recheneinrichtung (34) übertragen werden.

10. Verfahren nach Anspruch 9, **dadurch gekennzeichnet, dass** zumindest eine externe eine Konfiguration (52) zu den aktuellen Leistungsmetriken (42) und Netzwerkdaten (44) und Maschinendaten (46) von der externen elektronischen Recheneinrichtung (34) empfangen wird und in Abhängigkeit von der externen Konfiguration (52) der zumindest eine Steuerbefehl (50) erzeugt wird.

11. Verfahren nach Anspruch 10, **dadurch gekennzeichnet, dass** die zumindest eine externe Konfiguration (52) von der Konfigurationsdatenbank (36) abgespeichert wird und bei einem zukünftigen Betrieb berücksichtigt wird.

12. Computerprogrammprodukt mit Programmcodemitteln, welche eine elektronische Recheneinrichtung (30) dazu veranlassen, wenn die Programmcodemittel von der elektronischen Recheneinrichtung (30) abgearbeitet werden, ein Verfahren nach einem der Ansprüche 1 bis 11 durchzuführen.

13. Computerlesbares Speichermedium mit zumindest einem Computerprogrammprodukt nach Anspruch 12.

14. Ressourcenmanagementsystem (22) für eine Produktionsanlage (10) für zumindest ein Produkt (12), mit zumindest einer ersten Schnittstelle (24), einer zweiten Schnittstelle (26), einer dritten Schnittstelle (28) und einer elektronischen Recheneinrichtung (30), wobei das Ressourcenmanagementsystem (22) zum Durchführen eines Verfahrens nach einem der Ansprüche 1 bis 11 ausgebildet ist.

15. Produktionsanlage (10) für zumindest ein Produkt (12), mit zumindest einer maschinellen Lernplattform (14), mit einer Netzwerkeinrichtung (16), mit zumindest einer an einem Produktionsprozess des Produkts (12) beteiligten Maschine (18) und mit einem Ressourcenmanagementsystem (22) nach Anspruch 14.
